# EUROPÄISCHE PATENTSCHRIFT

(11) **EP 0 597 920 B1**
(45) Veröffentlichungstag und Bekanntmachung des Hinweises auf die Patenterteilung: **31.01.1996**
(21) Anmeldenummer: 92916181.8
(22) Anmeldetag: 29.07.1992
(51) Int. Cl.: C09J 189/00, C09J 201/00

(54) **WASSERHALTIGER KLEBSTOFF AUF BASIS VON CASEIN**
CASEIN-BASED AQUEOUS GLUE
COLLE AQUEUSE A BASE DE CASEINE

(30) Priorität: 07.08.1991 DE 4126075
(43) Veröffentlichungstag der Anmeldung: 25.05.1994
(73) Patentinhaber: Henkel Kommanditgesellschaft auf Aktien, D-40191 Düsseldorf (DE)
(72) Erfinder: BROICH, Ludwig, D-4000 Düsseldorf 13 (DE); HERLFTERKAMP, Bernhard, D-4250 Bottrop (DE); ONUSSEIT, Hermann, D-5657 Haan (DE)
(86) Internationale Anmeldenummer: EP9201722
(87) Internationale Veröffentlichungsnummer: WO9303110

(56) Entgegenhaltungen:
- DE-A- 1 620 092
- US-A- 2 357 073
- US-A- 2 943 071
- US-A- 3 692 713
- CHEMICAL ABSTRACTS, vol. 89, no. 18, 1. Oktober 1978, Columbus, Ohio, US;
- abstract no. 148480q, 'THERMOSETTING ADHESIVE COMPOSITION' Seite 90 ;

## Beschreibung

### "Wasserhaltiger Klebstoff auf Basis von Casein"

Die Erfindung betrifft einen Klebstoff auf Basis von Casein, wasserlöslichen Streckmitteln, Füllstoffen und gegebenenfalls weiteren Zusatzstoffen sowie seine Verwendung zur maschinellen Flaschenetikettierung.

Caseinklebstoffe werden als Flaschenetikettierungsklebstoffe, vornehmlich in Bereichen eingesetzt, wo die zu beklebenden Oberflächen naß und kalt sind, also z.B. in Brauereien, Sektkellereien und Erfrischungsgetränkefirmen. Hier haben sie eine dominierende Stellung, da sie optimal folgende Anforderungen erfüllen:
1. Gute Pump- und Fließfähigkeit bei der Verarbeitungstemperatur.
2. Hohe Naßklebrigkeit für die sichere Etikettenentnahme.
3. Trotz hoher Naßklebrigkeit können die Greiferfinger die Etiketten ohne Beschädigung der Etikettenpapiere abnehmen.
4. Beim Aufsetzen auf die nasse, kalte Oberfläche wird ein Teil des Wassers durch den Klebstoff aufgenommen, der andere Teil beim Anbürsten weggedrängt. Daher wird der Klebstoff einerseits nicht zu stark verdünnt, andererseits bleibt aber auch kein geschlossener Wasserfilm unter dem Klebstoff, was in beiden Fällen zum starken Schwimmen der Etiketten führen würde. Ein Caseinklebstoff hat also ein ausgewogenes Gleichgewicht zwischen Wasseraufnahme und Wasserverdrängung. Dadurch stellt ein Caseinklebstoff sofort einen festen Kontakt zwischen dem Etikett und der Flaschenoberfläche her, auch wenn sich eine Wasserschicht auf der Oberfläche befindet.
5. Der Caseinklebstoff bewirkt sofort einen absolut festen Sitz des Etiketts oder der Folie auf der nassen, kalten Oberfläche trotz des Verdünnungseffektes durch das anhaftende Wasser. Daher werden sie bei der weiteren Verarbeitung praktisch nicht mehr verschoben.
6. Bei den heutzutage teilweise sehr hohen Etikettierungsgeschwindigkeiten von bis ca. 80 000 Gebinden/Stunde ergeben Caseinklebstoffe einen sauberen und weitgehend spritzfreien Lauf ohne Fadenziehen.
7. Im abgetrockneten Zustand wird ein fester Verbund auch zu normal vergütetem Glas erzielt.
8. Die Schwitzwasserfestigkeit reicht für die heute gestellten Anforderungen aus.
9. Die mit Caseinklebstoffen verklebten Etiketten können in den zur Zeit üblichen Flaschenwaschanlagen unter Verwendung von 1,5- bis 2,5 %iger Natronlauge in den vorgegebenen Zeiten problemlos wieder abgelöst werden.

Die Caseinklebstoffe enthalten ca. 18 bis 25 Gew.-% Casein. Casein als Naturprodukt ist in seinen Eigenschaften gewissen Schwankungen unterworfen, so daß das Bedürfnis besteht, Casein mindestens anteilsweise durch andere klebende Substanzen mit insbesondere sicher einstellbaren und reproduzierbaren Eigenschaften zu ersetzen, die noch dazu wirtschaftlicher als Casein sind.

In der EP B1-0 080 141 wird die Herstellung eines Caseinklebstoffs sowie seine Verwendung zur maschinellen Etikettierung beschrieben. In Beispiel 1 wird ein wäßriger Klebstoff aus Casein, Maisstärke, Stärkeether und einem Hydroxyalkylether von oxidativ abgebauter Stärke sowie üblichen Zusätzen wie Harnstoff, Borax, Antischaummittel und Konservierungsmittel hergestellt. Hierbei ergibt sich ein Klebstoff, dessen Abhängigkeit der Viskosität von der Temperatur erheblich weniger ausgeprägt ist als die von Caseinklebstoffen mit mindestens 18 % Casein.

Hier will die Erfindung Abhilfe schaffen.

Die erfindungsgemäße Lösung ist den Patentansprüchen zu entnehmen. Sie beruht im wesentlichen darauf, daß die Viskosität einer wäßrigen Lösung von Casein und wasserlöslichen Streckmitteln durch Zusatz von natürlichen oder synthetischen Harzsäuren, Harzalkoholen oder Harzsäureestern sowie von Alkohol überraschenderweise stark temperaturabhängig ist. Darauf aufbauend wurde ein neuer Klebstoff entwickelt mit folgender Zusammensetzung:
a) 6 bis 18 Gew.-% säuregefälltes Casein,
b) 1 bis 10 Gew.-% eines oder mehrerer wasserlöslicher Streckmittel aus der Gruppe: Stärke, Stärkeether, Guar, Guarether und Homo- und Copolymere des Vinylalkohols, der Acrylamide, der Acrylsäure und der Methacrylsäure,
c) 1 bis 50 Gew.-% an natürlichen oder synthetischen Harzsäuren, Harzsäureestern oder Harzalkoholen,
d) 1 bis 5 Gew.-% an einem oder mehreren Alkoholen mit einem bis drei Kohlenstoffatomen,
e) basische Verbindungen zur Einstellung eines pH-Wertes des Klebstoffs im Bereich von 6 bis 10,
f) 0 bis 25 Gew.-% an Verflüssigungsmittel,
g) 30 bis 75 Gew.-% Wasser, wobei sich die Gew.-% auf den Klebstoff insgesamt beziehen.

Der erfindungsgemäße Klebstoff enthält also als Grundstoff säuregefälltes Casein. Darunter wird das Casein verstanden, das durch Zusatz von Säure wie z.B. Salzsäure, Schwefelsäure oder Milchsäure gefällt wurde. Das Casein enthält noch etwas Wasser, und zwar 8 bis 10 g Wasser pro 100 g Casein.
Vorzugsweise enthalten 100 g Klebstoff 6 bis 10 Gew.-% an Casein.

Unter "Harz" werden polymere Stoffgemische verstanden, die amorph sind und keine scharfen Erweichungspunkte haben und deren Aggregatzustand von flüssig über viskos bis fest reichen kann. Brauchbare Harzsäureester und ihre Verseifungsprodukte sind: Hydroabiethylalkohol, Phthalsäureester von Hydroabiethylalkohol, mit Natronlauge verseiftes Balsamharz, Ester von Kollophonium wie z.B. Methylester, Di- oder Triethylenglykolester, Glykolester des Kollophoniumharzes, sei es hydriert oder unhydriert, Polyterpenharz. Bevorzugt wird verseiftes Balsamharz.

Bereits sehr kleine Zusätze von ca. 1 % haben merkliche Effekte. Ein Zusatz von mehr als 50 Gew.-% an Harzderivaten ist möglich, jedoch können dann Eigenschaften wie Schwitzwasserfestigkeit, Laufverhalten auf der Maschine oder Naßklebrigkeit sich verschlechtern. Vorzugsweise enthalten 100 g Klebstoff 5 bis 30 Gew.-% an Harzsäureester, Harzsäuren oder Harzalkoholen.

Bei den Streckmitteln handelt es sich um Zusätze, die dem Klebstoff keine besonderen Eigenschaften verleihen sollen, sondern die hauptsächlich der Verbilligung dienen. In Frage kommen ein oder mehrere Mitglieder folgender Gruppe: Stärken, Stärkeether, Guar, Guarether, Homo- und Copolymere des Vinylalkohols, der Acrylamide, der Acrylsäure und der Methacrylsäure sowie deren Salze. Im einzelnen kommen in Frage: 1 bis 10 % an Stärken und 1 bis 10 % an Stärkeether sowie 1 bis 10 % an Guar und 1 bis 10 % an Guarether. An synthetischen wasserlöslichen Polymeren sei genannt: Polyvinylalkohol mit einem Verseifungsgrad von etwa 70 bis 98 % Polyacrylamid, Copolymere des Acrylamids mit Methacrylamid, N-Methylacrylamid, N-Ethylacrylamid, N-Propylacrylamid, N-Butylacrylamid, Dimethylaminoethylmethacrylat, Acrylsäure, Methacrylsäure, Polyacrylsäure, Copolymere der Acrylsäure mit Acrylnitril, Acrylsäure, Methyl- und -ethylester sowie deren Alkali- und Ammoniumsalze.

Bei den erfindungsgemäß verwendeten Alkoholen handelt es sich hauptsächlich um ein- oder mehrwertige Alkanole. Bevorzugt sind einwertige Alkohole, insbesondere Methanol.

Die Fließfähigkeit des Klebstoffs kann durch Zusatz bestimmter wasserlöslicher niedermolekularer Verflüssiger in an sich bekannter Weise reguliert werden. Dazu eignen sich besonders Harnstoff, Thioharnstoff und/oder Dicyandiamid, aber auch anorganische oder organische Salze wie Halogenide, Nitrate, Sulfate usw.. Derartige Stoffe werden zweckmäßigerweise in einer Konzentration von 0 bis 25 Gew.-%, vorzugsweise 1 bis 15 Gew.-%, bezogen auf den Klebstoff, eingesetzt.

Außerdem enthält der Klebstoff noch basische Verbindungen zur Einstellung des pH-Wertes auf einem Wert im Bereich von 6 bis 10. Dazu wird vorzugsweise Borax verwendet.

Außerdem können weitere Additive dem Klebstoff zugesetzt werden, um dessen Eigenschaften in bestimmte Richtung zu verändern. Genannt seien Netzmittel, Entschäumer, Konservierungsgsmittel, Füllstoffe und Duftstoffe.

Der Gesamtfeststoffgehalt der erfindungsgemäßen Klebstoffe liegt im Bereich von 25 bis 75 Gew.-%, vorzugsweise im Bereich von 30 bis 65 Gew.-%, bezogen auf den fertigen Klebstoff.

Der erfindungsgemäße Klebstoff wird durch Mischen der Ausgangskomponenten bei 20 bis 30°C in einem Rührmischer hergestellt. Dabei geht man zweckmäßigerweise folgendermaßen vor: Zu entionisiertem Wasser werden unter Rühren bei Raumtemperatur der Entschäumer, das wasserlösliche Streckmittel, das säuregefällte Casein und die basische Verbindung gegeben und homogen verteilt. Das Gemisch wird auf 50 bis 95 °C erwärmt und 10 bis 30 Minuten gerührt, bis eine klare Lösung erhalten wird. Anschließend werden das restliche Wasser sowie die Harzderivate und der Alkohol hinzugefügt und solange gerührt, bis eine homogene Verteilung erreicht wird.

Die Viskosität des fertigen Klebstoffs liegt üblicherweise im Bereich von 20 000 bis 200 000 mPa·s, insbesondere im Bereich von etwa 20 000 bis 100 000 mPa·s bei 25 °C nach Brookfield.

Die erfindungsgemäßen Klebstoffe haben den Vorteil, daß mit einer geringen Menge an Casein, z.B. 6 Gew.-% auch nasse Flaschen mit einer Temperatur von 2 bis 30 °C ebenso gut verklebt werden können wie mit dem bekannten Caseinklebstoff mit einem Gehalt von 18 bis 25 Gew.-% Casein. Das ist bisher von keinem anderen Caseinersatzklebstoff erreicht worden.

Die Erfindung wird anhand der nachfolgenden Beispiele näher erläutert:

### Beispiel 1

Unter dauerndem Rühren wurden in 924 g entionisiertes Wasser 4 g 1,2-Benzisothiazolin-3-on sowie 2 g eines handelsüblichen Entschäumers gegeben, anschließend wurden 60 g native Maisstärke, 40 g thermisch abgebaute Kartoffelstärke, 60 g Harnstoff, 180 g Casein sowie 50 g Borax hinzugefügt und homogen verteilt.

Nach dem Aufheizen auf 85 °C wurde 10 Minuten lang gerührt. In die abkühlende Lösung wurden 600 g "Hercolyn D" der Firma Hercules, 40 g Methanol sowie 40 g Wasser gegeben.

Das so erhaltene Produkt wies bei 25 °C eine Viskosität von 40 000 mPa·s auf.

### Beispiel 2

Unter dauerndem Rühren wurden in 700 g entionisiertes Wasser 4 g Benzisothiazolin sowie 2 g des handelsüblichen Entschäumers gegeben. Anschließend wurden 60 g native Maisstärke, 40 g thermisch hydrolytisch abgebaute Kartoffelstärke, 60 g Harnstoff, 160 g Casein sowie 40 g Borax hinzugefügt und homogen verteilt.

Nach dem Aufheizen auf 85 °C wurde 10 Minuten lang gerührt. In die abkühlende Lösung wurden 800 g "Abalyn" der Firma Hercules (chemische Struktur: Methylester vom Balsamharz), 40 g Methanol sowie das fehlende Wasser gegeben, so daß 2 000 g erreicht wurden.

Das so erhaltene Produkt wies bei 25 °C eine Viskosität von 35 000 mPa·s nach Brookfield auf.

### Beispiel 3

Sowohl mit dem Klebstoff gemäß Beispiel 1 als auch Beispiel 2 wurden über 2 Stunden auf einem Hochleistungsetikettierautomaten bei einer Geschwindigkeit von bis zu 7 000 Flaschen pro Stunde Versuchsetikettierungen durchgeführt. Die Leimtemperatur betrug nach dem Verlassen der vorgeschalteten Heizstation 25 bis 30 °C. Auf 3 bis 5 °C kalten, nassen Flaschen wurde eine besonders gute Fixierung, d.h. wie bei einem 18- bis 25 %igem Caseinleim erhalten.

### Beispiel 4

Beispiel für ca. 18 °C kalte, nasse Flaschen. Sonst analog zu Beispiel 3).

### Beispiel 5

Der erfindungsgemäße Klebstoff wurde sowohl mit Caseinklebstoffen als auch mit dem bekannten Stärkeklebstoff gemäß der EP 0 080 141 bezüglich seines Viskositätsverhaltens bei den wichtigsten Temperaturen verglichen. 30 °C entsprechen in etwa der Vorheiztemperatur. 15 °C entsprechen in etwa der Flaschentemperatur von alkoholfreie Getränke-Flaschen, 5 °C entsprechen in etwa der Temperatur von Bierflaschen.
Die Klebstoffe wurden folgendermaßen hergestellt:
a) Der Stärkeklebstoff I wurde nach der Rezeptur Optal 4075 hergestellt.
b) Der Stärkeklebstoff II wurde gemäß Beispiel 1 der EP 0 080 141 hergestellt.
c) Der Caseinklebstoff IV wurde nach der Rezeptur Optal K 560 hergestellt.
d) Der erfindungsgemäße Klebstoff V wurde nach Beispiel 2, Seite 8 hergestellt.

Die Viskositäten aller Klebstoffe wurden folgendermaßen gemessen: Brookfield Spindel 7, 20 U/Min. und 25 °C.

Die erhaltenen Werte wurden in folgender Tabelle zusammengestellt:

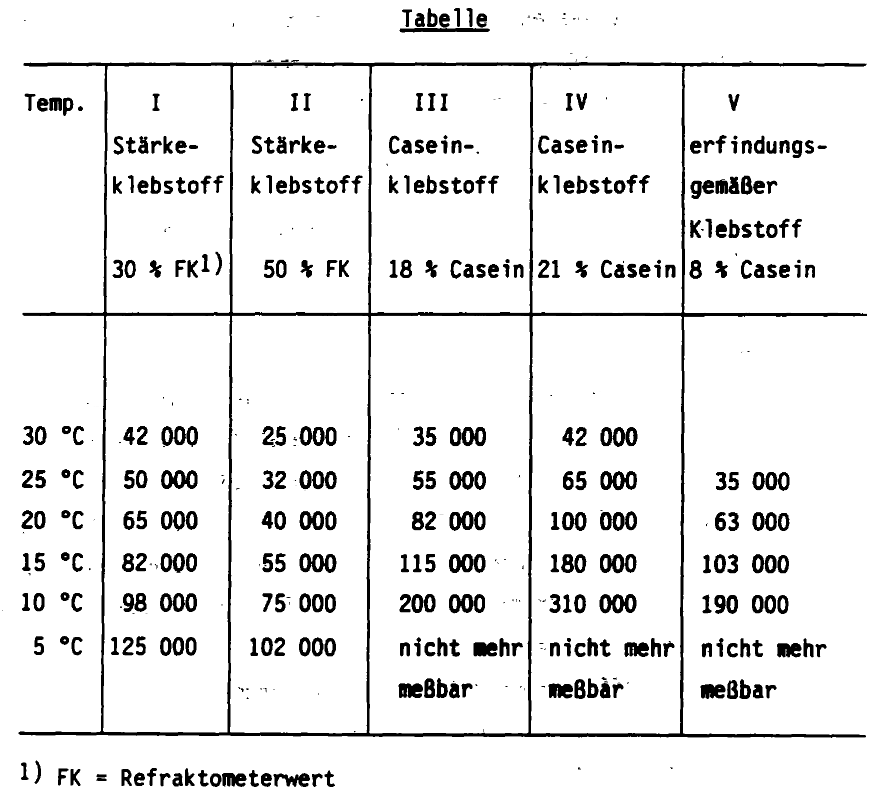

Der Vergleich der Zahlenwerte zeigt, daß die Viskositäten des erfindungsgemäßen Klebstoffs im Temperaturbereich 0 bis 15 °C sich ebenso stark ändern wie die des Caseinklebstoffs mit 18 % Casein. Diese starke Viskositätszunahme bewirkt, daß die Etiketten bei 3 bis 15 °C sicher am vorgesehenen Platz haften. Der Viskositätsanstieg der Stärkeklebstoffe in diesem Temperaturbereich ist wesentlich geringer.

## Patentansprüche

1. Klebstoff auf Basis von Casein, wasserlöslichen Streckmitteln, Füllstoffen und gegebenenfalls weiteren Zusatzstoffen, enthaltend
a) 6 bis 18 Gew.-% säuregefälltes Casein,
b) 1 bis 10 Gew.-% wasserlösliche Streckmittel aus der Gruppe: Stärke, Stärkeether, Guar, Guarether sowie der Homo- und Copolymeren des Vinylalkohols, der Acrylamide, der Acrylsäure und der Methacrylsäure,
c) 1 bis 50 Gew.-% natürliche oder synthetische Harzsäuren, Harzsäureester oder Harzalkohole,
d) 1 bis 5 Gew.-% Alkohole mit 1 bis 3 Kohlenstoffatomen,
e) basische Verbindungen zur Einstellung eines pH-Wertes des Klebstoffs im Bereich von 6 bis 10,
f) 0 bis 25 Gew.-% Verflüssigungsmittel und
g) 35 bis 75 Gew.-% Wasser, wobei sich die Gew.-% auf den Klebstoff insgesamt beziehen.

2. Klebstoff nach Anspruch 1, gekennzeichnet durch 6 bis 10 Gew.-% an Casein.

3. Klebstoff nach Anspruch 1, gekennzeichnet durch 5 bis 30 Gew.-% an natürlichen oder synthetischen Harzsäuren, Harzsäureestern oder Harzalkoholen.

4. Klebstoff nach Anspruch 1, gekennzeichnet durch 1 bis 15 Gew.-% an Verflüssigungsmittel.

5. Klebstoff nach Anspruch 1, gekennzeichnet durch einen Feststoffgehalt im Bereich von 25 bis 75 Gew.-%.

6. Klebstoff nach Anspruch 1, gekennzeichnet durch einen Feststoffgehalt von 30 bis 65 Gew.-%.

7. Verwendung des Klebstoffs nach mindestens einem der Ansprüche 1 bis 6 zur maschinellen Etikettierung von Glaswaren, insbesondere zur Etikettierung von Flaschen.

## Claims

1. An adhesive based on casein, water-soluble extenders, fillers and optionally other additives, containing
a) 6 to 18% by weight of acid-precipitated casein,
b) 1 to 10% by weight of water-soluble extenders from the group consisting of starch, starch ethers, guar, guar ethers and also homopolymers and copolymers of vinyl alcohol, acrylamides, acrylic acid and methacrylic acid,
c) 1 to 50% by weight of natural or synthetic resin acids, resin acid esters or resin alcohols,
d) 1 to 5% by weight of alcohols containing 1 to 3 carbon atoms,
e) basic compounds for adjusting the pH of the adhesive to a value of 6 to 10,
f) 0 to 25% by weight of liquifying agents and
g) 35 to 75% by weight of water,
the percentages by weight being based on the adhesive as a whole.

2. An adhesive as claimed in claim 1, characterized by a casein content of 6 to 10% by weight.

3. An adhesive as claimed in claim 1, characterized by a content of 5 to 30% by weight of natural or synthetic resin acids, resin acid esters or resin alcohols.

4. An adhesive as claimed in claim 1, characterized by a content of 1 to 15% by weight of liquifying agents.

5. An adhesive as claimed in claim 1, characterized by a solids content of 25 to 75% by weight.

6. An adhesive as claimed in claim 1, characterized by a solids content of 30 to 65% by weight.

7. The use of the adhesive claimed in at least one of claims 1 to 6 for the machine labeling of glassware, more particularly bottles.

## Revendications

1. Colle à base de caséine, de diluants solubles dans l'eau, de charges et, le cas échéant, d'autres additifs, renfermant
a) 6 à 18 % en poids de caséine précipitée par acide,
b) 1 à 10 % en poids de diluants solubles dans l'eau faisant partie du groupe des composés suivants: amidon, éther d'amidon, Guar, éther de Guar et homo- et copolymères de l'alcool vinylique, d'acrylamides, de l'acide acrylique et de l'acide méthacrylique,
c) 1 à 50 % en poids d'acides résiniques, d'esters d'acides résiniques ou d'alcools de résine naturels ou synthétiques,
d) 1 à 5 % en poids d'alcools comportant un à trois atomes de carbone,
e) des composés basiques pour l'ajustement du pH de la colle dans l'intervalle de 6 à 10,
f) 0 à 25 % en poids de fluidifiant et
g) 30 à 75 % en poids d'eau, le pourcentage en poids se rapportant à la totalité de la colle.

2. Colle selon la revendication 1, caractérisée par 6 à 10 % en poids de caséine.

3. Colle selon la revendication 1, caractérisée par 5 à 30 % en poids d'acides résiniques, d'esters d'acides résiniques ou d'alcools de résine naturels ou synthétiques.

4. Colle selon la revendication 1, caractérisée par 1 à 15 % en poids de fluidifiant.

5. Colle selon la revendication 1, caractérisée par une concentration en matières solides comprise dans l'intervalle de 25 à 75 % en poids.

6. Colle selon la revendication 1, caractérisée par une concentration en matières solides de 30 à 65 % en poids.

7. Utilisation de la colle selon au moins une des revendications 1 à 6 pour l'étiquetage automatique de verreries, en particulier pour l'étiquetage de bouteilles.
